# EUROPEAN PATENT SPECIFICATION

(11) **EP 0 786 967 B1**
(45) Date of publication and mention of the grant of the patent: **28.02.2007**
(21) Application number: 96923566.2
(22) Date of filing: 01.07.1996
(51) Int. Cl.: A61C 8/00

(54) **SELF-TAPPING SCREW-TYPE DENTAL IMPLANT**
ZAHNIMPLANTAT MIT SELBSTSCHNEIDENDEM GEWINDE
IMPLANT DENTAIRE DU TYPE A VIS AUTOTARAUDEUSE

(30) Priority: 18.07.1995 US 1486 P; 07.09.1995 US 3359 P; 24.01.1996 US 590087
(43) Date of publication of application: 06.08.1997
(73) Proprietor: IMPLANT INNOVATIONS, INC., Palm Beach Gardens, Florida 33410 (US)
(72) Inventor: BEATY, Keith, D., Jupiter, FL 33469-2960 (US); GOODMAN, Ralph, E., West Palm Beach, FL 33415 (US); HEYLMUN, Thomas, S., West Palm Beach, FL 33417 (US); REAMS, James, W., Stuart, FL 33497 (US)
(74) Representative: Grünecker, Kinkeldey, Stockmair & Schwanhäusser Anwaltssozietät
(86) International application number: PCT/US1996/011138
(87) International publication number: WO 1997/003621

(56) References cited:
- US-A- 4 324 550
- US-A- 4 406 623
- US-A- 4 537 185
- US-A- 5 269 685

## Description

The present invention relates generally to dental implants and, more particularly, to screw-type dental implants which are self-tapping.

Screw-type dental implants are widely used and have been know for a number of years. A self-tapping dental implant is one that can be threaded into a pre-drilled hole in a jaw bone without pre-tapping the hole. The apical end portion of the implant itself taps the hole as the implant is simultaneously pressed into the hole and rotated.

Self-tapping implants have been well known for a number of years, but they are generally more difficult to install than non-self-tapping implants which require pre-tapping of the hole. One problem with self-tapping implants is the instability of the implant when it is first inserted into the pre-drilled hole; this instability can make it difficult to ensure that the axis of the implant is aligned with, and parallel to, the axis of the hole. Another problem particularly with hard jaw bones, is the amount of torque that must be manually applied to the implant to overcome the friction between the implant and the bone to effect self-tapping of the implant into the bone. There has been an ongoing need for a self-tapping implant that would alleviate these problems.

From the United States Patent US 5,269,685 an anchoring member probing screw - shaped of titanium for permanent anchorage in bone tissue is known. The United States Patent US 4,537,185 reveals a cannulated fixation screw.

It is a primary object of the invention to provide an improved self-tapping dental implant as defined in claim 1 that stabilizes itself at the beginning of the self-tapping operation so that the axis of the implant is coaxially aligned with the pre-drilled hole in the jaw bone.

Another important object of the invention is to provide an improved self-tapping dental implant that reduces the torque required to be applied to the implant during the self-tapping operation, by reducing the friction between the implant and the bone. A related object is to reduce the time required to install the implant.

A further object of the invention is to provide such an improved self-tapping dental implant having highly efficient bone-cutting surfaces in the self-tapping region of the implant.

Other objects and advantages of the invention will become apparent from the following detailed description and the accompanying drawings.

In accordance with the present invention, the foregoing objectives are realized by providing an improved self-tapping dental implant comprising a generally cylindrical body having a threaded outer surface for securing the implant to the walls of a performed hole in a jaw bone, and a plurality of longitudinal recesses formed in the threaded surface at one end thereof and extending longitudinally through a plurality of turns of the thread to form a self-tapping cutting edge at each interruption of the thread by one of the recesses. In one aspect of the invention, each thread segment that extends between a pair of adjacent recesses diminishes in radius between the leading and trailing ends of the thread segments. In another aspect of the invention, the threaded surface of the implant body is tapered in the longitudinal direction along at least a portion of the recesses so that successive cutting edges along the thread in the tapered region have progressively changing radii, decreasing toward the smaller end of the implant.
FIG. 1 is a side elevation of a dental implant embodying the present invention;
FIG. 2 is a top plan view of the implant of FIG. 1;
FIG. 3 is a bottom plan view of the implant of FIG. 1;
FIG. 4 is an enlarged version of FIG. 3 showing the incremental self-tapping cutting action of the invention starting at the bottom end of the implant;
FIG. 5 is a helical section view taken along line 5-5 in FIG. 1 showing four successive thread segments;
FIG. 6 is a section view of the threads of the implant illustrating the major, minor and pitch diameter;
FIGS. 7A-7C are section views of a trough between two longitudinally adjacent thread segments along the tapered, lower portion of the implant;
FIG. 8 is a side elevation of a small-diameter dental implant embodying the invention;
FIG. 9 is a bottom plan view of the implant of FIG. 8;
FIG. 10 is a side elevation of a large-diameter dental implant embodying the invention;
FIG. 11 is a bottom plan view of the implant of FIG. 10;
FIG. 12 is a side elevation of a modified implant embodying the invention;
FIG. 13 is a section taken generally along line 13-13 in FIG. 12;
FIG. 14 is a diagrammatic side elevation of the bottom portion of a dental implant embodying a modified version of the invention; and
FIG. 15 is a diagrammatic bottom plan view of a dental implant embodying another modified version of the invention.

While the invention is susceptible to various modifications and alternative forms, specific embodiments thereof have been shown by way of example in the drawings and will be described in detail herein. It should be understood, however, that it is not intended to limit the invention to the particular forms disclosed, but, to the contrary, the intention is to cover all modifications, equivalents and alternatives falling within the scope of the invention as defined by the appended claims.

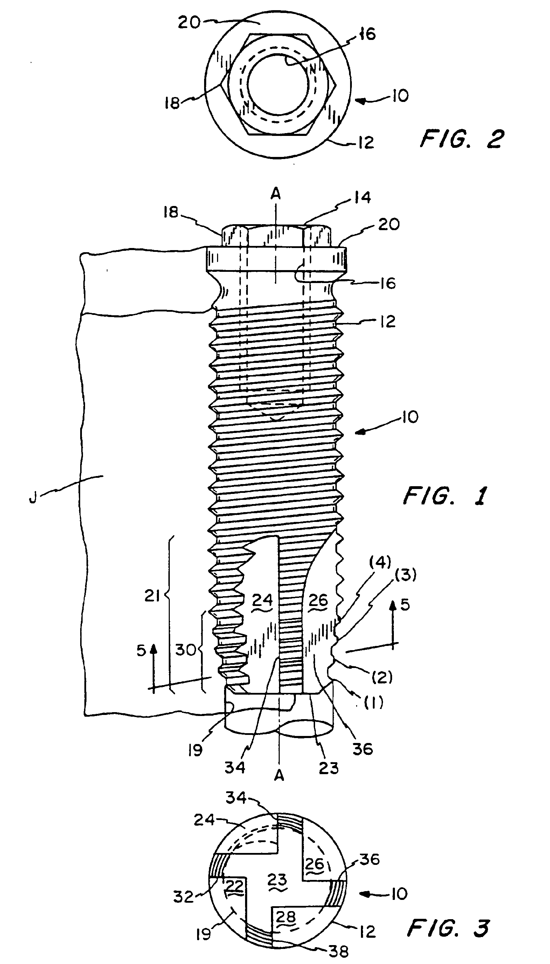

Turning now to the drawings and referring first to FIGS. 1-3, a dental implant 10 has an externally threaded, substantially cylindrical main body 12 symmetrical around the longitudinal axis A-A of the implant. The top end 14 of the implant 10 is fitted in a known way for receiving dental components useful for making a dental restoration, as well as a dental restoration itself. As can be seen in FIG. 2, the illustrative implant 10 has an internal bore 16 which is internally threaded for receiving a machine-screw-like bolt (not shown) and, surrounding this bore, a hexagonal boss 18 which can be engaged for screwing the implant into a pre-drilled bore 19 in a patient's jaw bone J. The hexagonal boss 18 also forms part of a non-rotational coupling between the implant 10 and the above-mentioned components and restoration. The boss 18 is surrounded by an annuiar shoulder 20 against which such components and restoration may abut when attached to the implant 10.

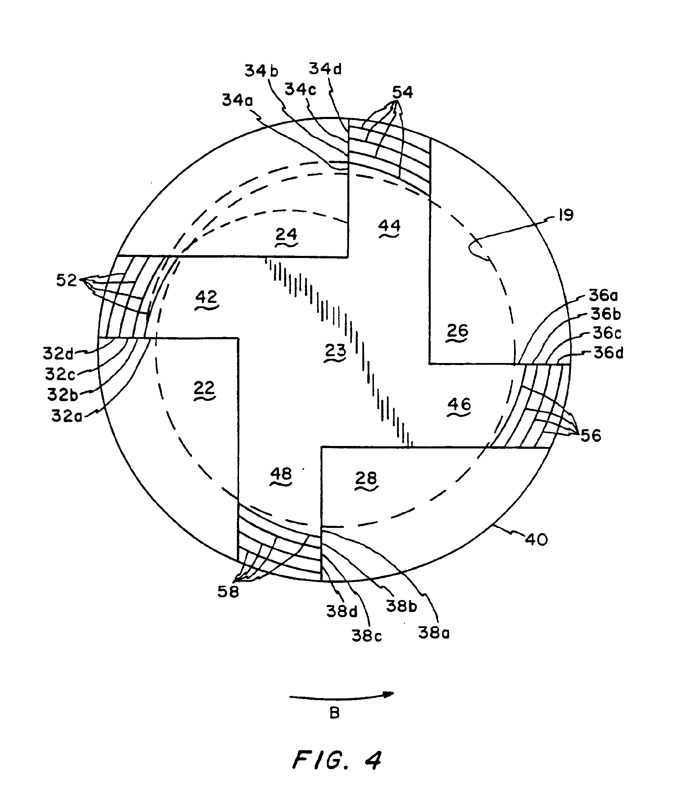

The bottom end 21 of the implant 10 has four axially elongated recesses or cutouts 22, 24, 26 and 28, spaced symmetrically 90 degrees apart around the longitudinal axis of the implant 10. These four recesses form four cutting edges 32, 34, 36 and 38 which are effective to self-tap the implant 10 into the pre-drilled bore 19 when the implant 10 is turned counterclockwise around the longitudinal axis as viewed in FIG. 4 (in the direction indicated by the curved arrow B).

As seen most clearly in the enlarged FIG. 4, the cutting edges 32, 34, 36 and 38 are all within the circular locus 40 of the main body 12, so that the threads on the main body following the self-tapping threads into the bore 19 will engage in the side wall of the bore 19 and thereby prevent wobbling of the implant 10 as it is screwed into the patient's jaw bone J. The main body portions 42, 44, 46 and 48 that remain between adjacent pairs of the recesses 22-28 have elongated circumferential thread segments 52, 54, 56 and 58, respectively. These thread segments are actually milling tools in that they are used to cut internal threads into the preformed bore of the bone. As such, thread segments 52, 54, 56, and 58 are actually modified thread segments because of the additional function they perform. If these modified thread segments had constant major and minor radii, they could rub on the interior wall of the bore 19 as the implant 10 is threaded into that bore 19. To reduce such rubbing friction between the segments 52-58 and the jaw bone J, the major and minor radial dimensions of each of these segments are progressively reduced substantially immediately following the relevant cutting edge, and this reduction continues to the trailing edge of the segment.

For example, looking at the body portion 42, the major radius of each segment 52 is progressively reduced in size from the recess 22 to the recess 24 so that the outer surface of this segment takes on an inwardly-curving contour. FIG. 4 shows a set of such contours, on successively smaller diameters proceeding toward the bottom end of the implant 10, due to the fact that the bottommost portion 30 of the self-tapping segment of the implant tapers to a smaller size toward the extremity 23 of the bottom end 21. Accordingly, each tapping thread segment, regardless of the diameter of its circumferential locus, is provided with this friction-reducing structure. As illustrated by the innermost broken-line arc in FIG. 4, the major radius of curvature of each thread segment is smaller than that of the implant body 12 and the bore hole 19.

As can be seen in FIG. 4, this configuration confines the engagement between the peak of the self-tapping thread and the bone to the cutting edges of the tapping thread segments. Thus, the torque applied to the implant 10 to thread it into the bone is utilized primarily to cut a thread into the bone, and not to overcome friction between the bone and non-cutting major diameter surfaces of the implant. Consequently, the torque required to be applied to the implant 10 to effect self-tapping is reduced, as is the time required to install the implant 10.

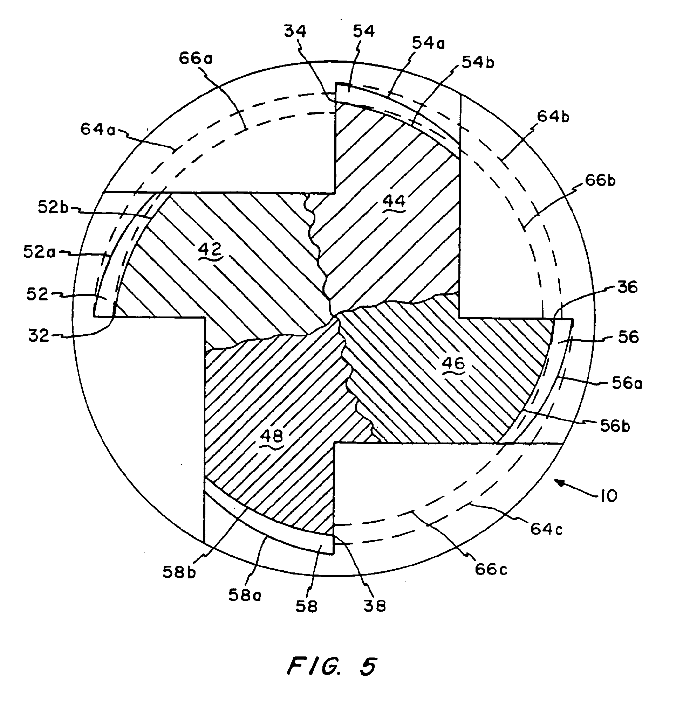

FIG. 5 is a helical section view of the implant 10 showing the peaks and the troughs of four successive thread segments 52, 54, 56 and 58 corresponding to one thread turn, and their associated four body portions 42, 44, 46 and 48. In FIG. 5, the reference numerals 52a, 54a, 56a and 58a indicate the peak, or major diameter, of the thread segments following the respective relevant cutting edges 32, 34, 36 and 38. Reference numerals 52b, 54b, 56b and 58b indicate the trough, or minor diameter, of each of those respective thread segments. In accordance with the invention, the troughs 52b, 54b, 56b and 58b, as well as the peaks 52a, 54a, 56a and 58a, of these thread segments move toward the implant axis thereby reducing the minor diameter as well as the major diameter of each segment, immediately following the relevant cutting edge. The circular dashed line 64a shows the cutting locus of the peak of the cutting edge 32, while the circular dashed line 66a of relatively smaller radius shows the cutting locus of the trough of the same cutting edge 32. As is evident from these locus lines, both the peak 52a and the trough 52b of the thread segment 52 are "friction relieved" away from the interior of the bore immediately following the cutting action of the cutting edge 32.

Similarly the peak 54a and the trough 54b of the thread segment 54 are "friction relieved" away from the interior of the bore immediately following the cutting action of the cutting edge 34, as is apparent from the major and minor locus lines 64b and 66b. It is also apparent from the major and minor locus lines 64b and 66b of the second cutting edge 34 are larger than the major and minor radii 64a and 66a of the first cutting edge 32. The third thread segment 56 includes a peak 56a and trough 56b with still larger radii and its cutting edge 36 cuts on these larger radii as is indicated by the major and minor locus lines 64c and 66c. Thread segment 56 is similarly "friction relieved" at both its peak 56a and its trough 56b. The fourth thread segment 58 shown in FIG. 5 has similar properties, as do the thread segments of successive thread turns which follow on increasingly larger radii in the bottom end 21 of the implant 10. It should be noted that the amount of reduction in the major radius is independent of the reduction in the minor radii. Thus, the major radii may be reduced more or less than the minor radii.

Although the frictional relief is shown starting immediately after the cutting edges, the frictional relief may also start a short distance behind the cutting edge. Furthermore, the relief may be accomplished by other methods than by reducing the major and minor radii. For example, the reduction in the pitch radius which has been discussed thus far is typically measured from the longitudinal axis of the body of the implant. After the cutting edge, the major and minor radii measured from the longitudinal axis are reduced. However, if the axis from which the radius is measured is offset from the longitudinal axis, then relief may accomplished in this manner as well. In this way, the radius after the cutting edge is not reduced, but instead is merely measured from an axis offset from the longitudinal axis of the implant to achieve the desired relief.

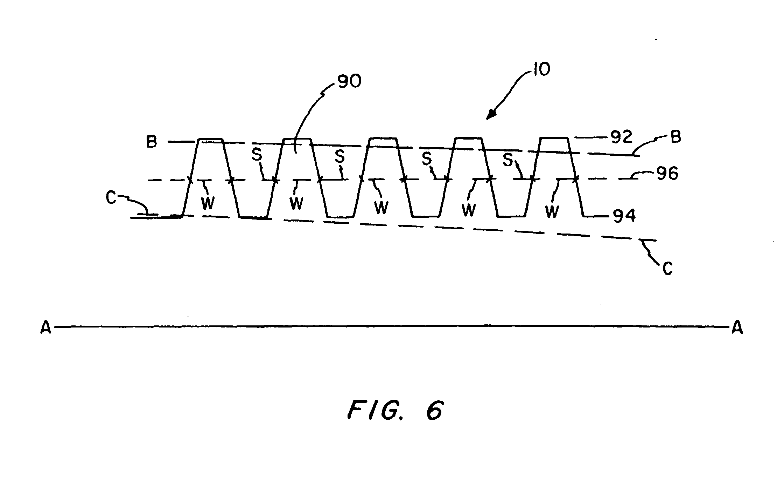

The invention may be further understood with the aid of FIG. 6, illustrating the implant 10 with an external thread 90 having a major radius 92 and a minor radius 94. The line A-A represents the longitudinal axis of the implant 10. By definition, the "pitch radius" of the thread 90 is located on the line 96 on which the thread width W of each turn is equal to the space S between adjacent turns. This property is not affected by changing the major radius 92 alone, as is indicated by the sloped line B-B, which shows a progressive reduction of the major radius from one thread turn to the next. On the other hand, if both the major radius 92 and minor radius 94 of the thread 90 are reduced together, no other change in the thread parameters being made, the pitch radius 96 is also reduced as can be seen if the minor radius is reduced along line C-C. Thus, as is shown in FIGS. 1 and 4, the bottom portion 30 of the implant 10 tapers to a smaller size toward the extremity 23 in a shape which reduces both the major and the minor radii of the thread, thereby reducing the pitch radius as well. Referring again to FIG. 5. the progressive reduction of both the major and the minor radii of each thread segment 52. 54, 46 and 58 brings about a progressive reduction of the pitch radius of that thread segment. Consequently, in the illustrated embodiment, the pitch radius of each thread segment is gradually reduced from the cutting edge to the trailing edge of that thread segment.

As can be seen most clearly in FIG. 1, the lower portion 30 of the implant 10 is tapered to a smaller diameter than the main body 12 over an axial distance encompassing at least the last four thread turns, which are numbered (1), (2), (3) and (4), respectively, beginning at the apical end surface 23. In order to maintain a substantially constant thread depth along the length of the tapered portion 30, both the minor and major radii of the thread (from the axis of the implant) increase progressively between the narrow end and the wide end of the tapered portion 30 (see FIGS. 1 and 4). As can be seen in FIG. 1, the bore 19 has an internal radius which is smaller than the major (outer) radius of the first thread turn (1). The first thread turn (1) therefore starts cutting into the sidewalls of the bore 19 immediately upon introduction of the implant 10 into the bore by rotating the implant about its axis while pressing it axially into the bore. As the implant 10 is advanced into the bore 19, the successive cutting edges 32a, 34a, 36a and 38a formed along the first turn (1) of the thread cut progressively deeper into the bore wall. The depth of the cut made by the first cutting edge 32a is illustrated by the broken line emerging from the tip of that cutting edge in FIG. 4.

As can be seen in FIG. 4, because of the taper of the lower portion 30 of the implant 10, each of the cutting edges 32b, 34b, 36b and 38b in the second turn (2) of the implant thread has a larger radius than the corresponding cutting edge in the first turn (1). Similarly, the cutting edges 32c-38c in the third turn (3) and edges 32d-38d in the fourth turn (4) all progressively increase in radius so that they cut progressively deeper into the bore wall as the implant 10 is threaded into the bore 19.

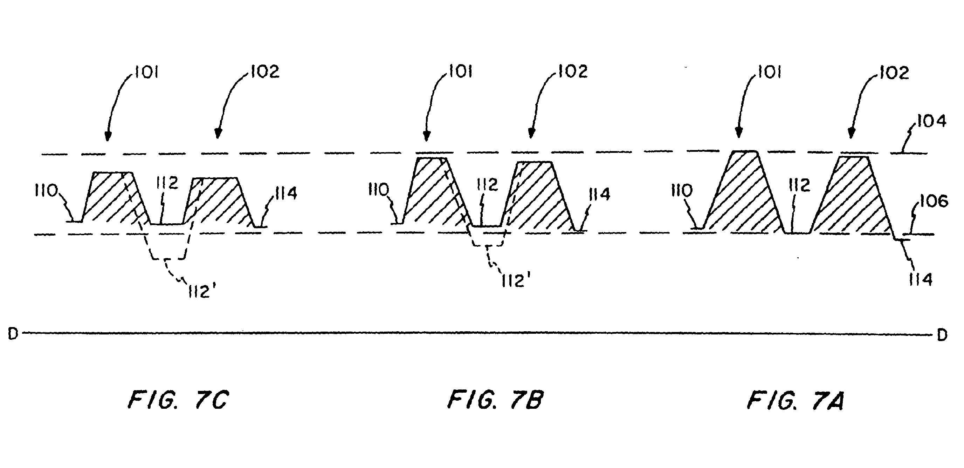

FIGS. 7A-7C illustrate three sectional cuts through two longitudinally adjacent modified thread segments 101 and 102 in the tapered end of the implant. FIG. 7A is a sectional view immediately behind the cutting edge of the modified thread segments 101 and 102. FIG. 7B is a sectional view between the cutting edge and the trailing end of the thread segments 101 and 102. FIG. 7C is a sectional view near the trailing end of the thread segments 101 and 102. In essence, FIGS. 7A-7C progressively show the thread segments 101 and 102 at different circumferential locations from a point near their cutting edges to a point near their trailing ends.

Line D-D represents the longitudinal axis of the implant. Line 104 is the major radius of thread segment 101 immediately following its cutting edge. Line 106 is the minor radius of thread segment 101 immediately following its cutting edge. Line 106 coincides with the radius of trough 112.

Thread segment 102 is closer to the apical end of the implant than thread segment 101. This is shown by the relative radii of troughs 110, 112, 114 with respect to longitudinal axis D-D. Trough 114 has the smallest radius while trough 110 has the largest radius with the radius of trough 112 falling therebetween. This is also shown by the relative radii of the peaks of thread segments 101 and 102.

The dashed lines represent the current invention. As can be seen by the solid-line trough 112, the radius of the floor of the trough 112 progressively increases due to the fact that each thread segment in the tapered portion is spiraling outward away from the longitudinal axis D-D of the implant so as to eventually merge with the threads in the non-tapered body of the implant which typically have larger major and minor radii. The present invention offsets this rising floor of the trough 112 by cutting further into the implant body to produce trough 112' shown in dashed lines in FIGS. 7B-7C. This cutting produces additional relief and effectively modifies the pitch radius such that it remains constant or even decreases in the tapered end portion. Thus, as bone tissue is initially cut by the cutting edge of the present invention, it does not continuously encounter a progressively rising trough 112 which would then compact the bone into the sidewalls of the bore of the bone. Instead, it encounters reduced-radius trough 112'. Continuous compression of the bone tissue can lead to trauma of that bone tissue. The present invention minimizes the likelihood of such trauma.

Moreover, as an implant lacking the inventive reduction in minor radius is turned into the bore, bone tissue entering trough 112 between two longitudinally adjacent thread segments 101 and 102 would confront not only a rising floor due to the normally increasing minor radius associated with the taper, but it also would encounter a reduced area through which it must pass. On the other hand, as the minor radius decreases to produce trough 112', the tool which cuts the progressively deeper trough 112' extends further inward toward the longitudinal axis D-D. Consequently, the sides of the thread segments 101 and 102 are also cut by the tool to produce additional area between two longitudinally adjacent thread segments 101 and 102 as is shown by the dashed lines. Thus, the area between the two longitudinally adjacent threads segments 101 and 102 increases as does the volume therebetween. This increase allows for the bone tissue to adequately occupy this volume, but not so much so that the bone tissue is compressed to a point at which trauma may occur. In the preferred embodiment of this invention, the minor radius at trough 112' decreases in a manner to at least offset the reduction in area due to the normal increasing minor radius associated with the tapering at the lower portion of the implant.

In each thread turn the four cutting edges 32, 34, 36, 38 are equally spaced around the longitudinal axis of the implant 10, which contributes to axial stability from the start of the threading of the implant 10 into the bore 19. To further contribute to such stability, each succeeding cut increases the depth by only a small increment (typically 0,0254 mm (0.001 inch)), which correspondingly restrains the increase of friction to small incremental increases. The initial cut made by the first cutting surface to engage the bone (cutting surface 32a in the implant of FIGS. 1-4) is slightly deeper than the incremental increase in the cutting depth effected by each successive cutting surface. By the time the entire tapered portion 30 has entered the bore 19, the path of the implant 10 into the bore is stably established.

It should be noted that the successive increases in the cutting radius occur not only in the first thread turn, but also in each successive thread turn. Thus, in the illustrative implant 10 in which the taper extends over four thread turns, and in which the four recesses provide four incremental increases in the cutting radius in each thread turn, there are a total of 16 incremental increases in the cutting radius along the entire length of the taper.

Of course, the tapered portion of the implant 10 may extend over any desired number of thread turns, either greater or fewer than the four-thread turns in the tapered region of the implant of FIGS. 1-4. Also, the thread itself may be either a right-hand thread or a left-hand thread, and may be either a single-lead thread (as illustrated) or a multiple-lead thread.

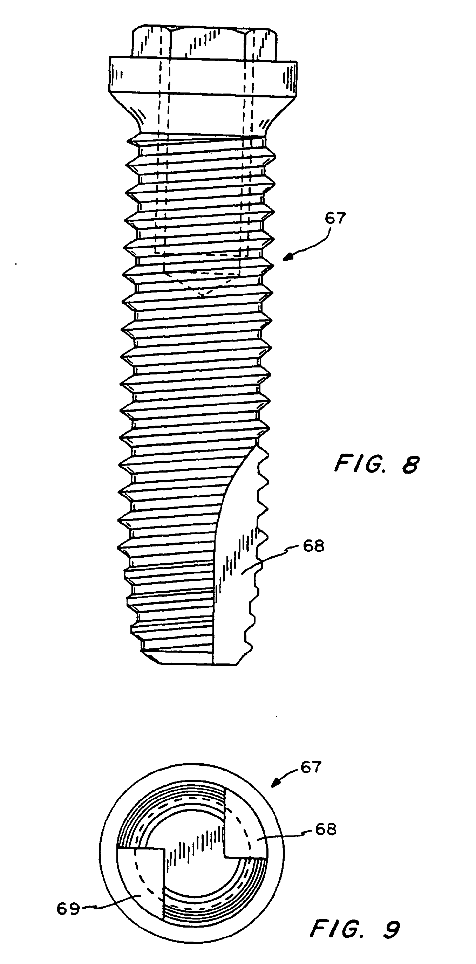

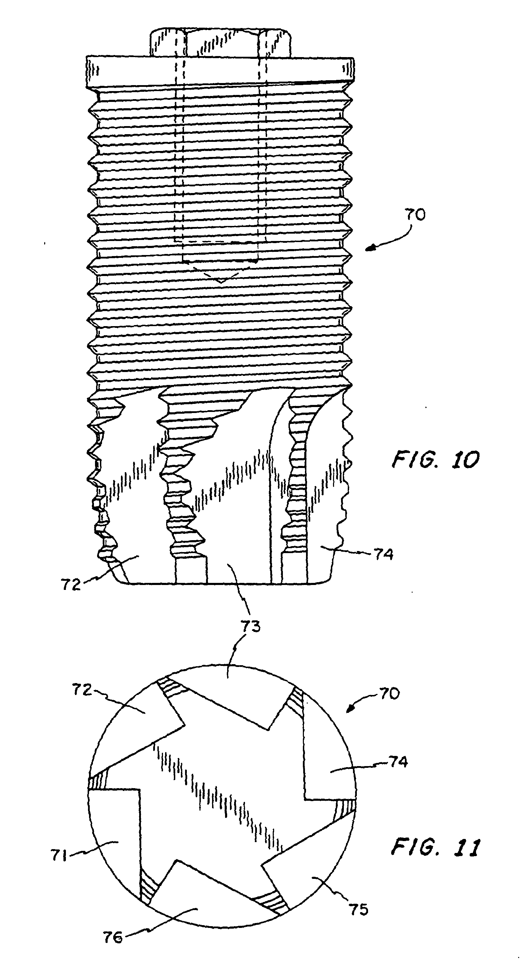

It will also be appreciated that the number of recesses included in the implant may be greater or fewer than the four recesses included in the implant of FIGS. 1-4. For example, FIGS. 8 and 9 illustrate a narrow implant 67 that has only two recesses 68 and 69, diametrically opposed, because of the smaller diameter of the implant. FIGS. 10 and 11 illustrate a wide implant 70 that includes six recesses 71-76 equally spaced around the axis of the implant, because of the larger diameter of the implant.

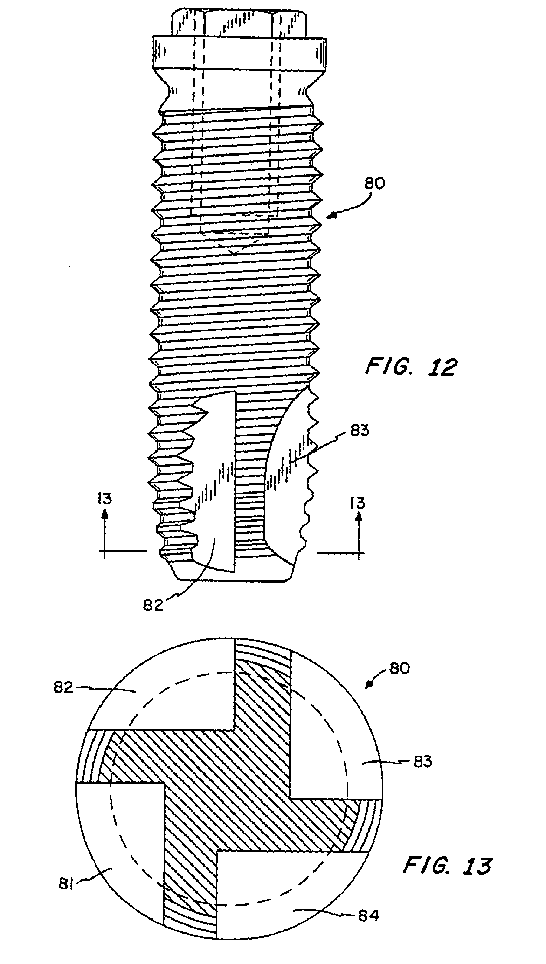

FIGS. 12 and 13 illustrate an implant 80 in which the recesses 81-84 are at least partially closed at both ends rather than extending through to the apical end of the implant as in the implant 10 of FIGS. 1-6. The closed-end recesses 81-84 direct the bone particles from the tapping operation to the side wall of the pre-drilled hole rather than to the end of the hole, to perhaps facilitate bonding of the bone to the implant 80.

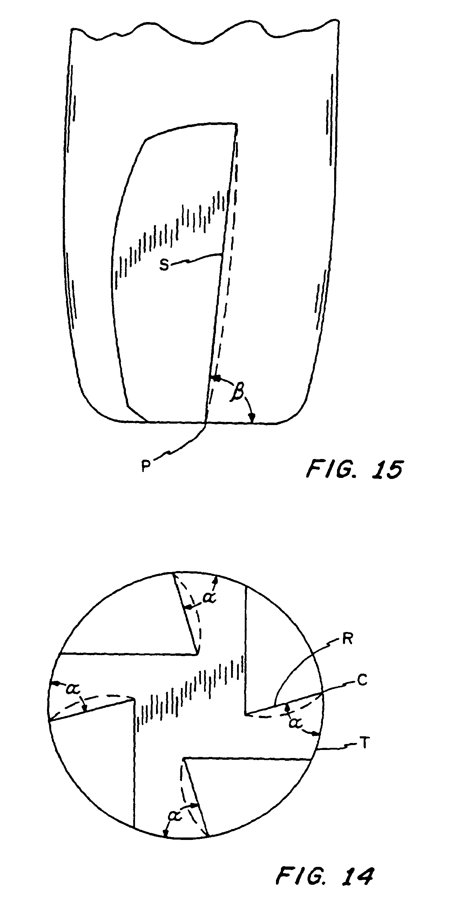

Although the cutting surface formed by each of the recesses described above lies in a radial plane extending parallel to the axis of the implant, the plane of the cutting surfaces may be tilted as illustrated in the FIG. 14 to form an acute angle a in transverse cross-section, forming a chisel-like corner C at the outermost edge of the cutting surface. That is, the recess wall R that forms the cutting edge forms an acute angle a with the thread segment T that trails that cutting edge. This acute angle a concentrates the force applied to the bone during the self-tapping operation in a smaller area of the bone, thereby reducing the amount of torque required to be applied to the implant to effect self-tapping.

To concentrate the applied force in an even smaller area of the bone, the plane of the cutting surface S may also be tilted as illustrated in FIG. 15 to form an acute angle b in longitudinal cross-section or side elevation, forming a sharp point P at the distal end of the outermost edge of the cutting surface. If desired, the cutting surface may be made curvilinear in either or both of the transverse and longitudinal sections, as illustrated by the broken lines in FIGS. 14 and 15, to even further concentrate the force applied to the bone by the implant during self-tapping.

## Claims

1. A self-tapping dental implant comprising
a generally cylindrical body (12) having a threaded outer surface for securing the implant to the walls of a preformed hole (19) in a bone, said body (12) having a plurality of longitudinal recesses (22, 24, 26, 28) formed in said threaded surface at one end thereof and extending longitudinally through a plurality of turns of the thread to form a self-tapping cutting edge (32, 34, 36, 38) at each interruption of the thread by one of said recesses (22, 24, 26, 28), and each modified thread segment extending between a pair of adjacent recesses (22, 24, 26, 28) **characterized in that** the pitch radius between the leading and trailing ends of the modified thread segment is diminishing, wherein the pitch radius is defined as a distance between the longitudinal axis of the implant and the line on which the thread width of each turn is equal to the space between adjacent turns, and such that the minor radius (94) of the modified thread segment is diminishing from the leading end to the trailing end of said modified thread segment.

2. The self-tapping implant of claim 1 wherein the
threaded surface of said body (12) is tapered in the longitudinal direction along at least a portion of said recesses (22, 24, 26, 28) so that successive cutting edges (32, 34, 36, 38) along the thread in the tapered region have progressively changing radii.

3. The self-tapping implant of claim 1 or 2 wherein both the minor and major radii (94; 92) of the modified thread segments between said recesses (22, 24, 26, 28) follow said longitudinal taper.

4. The self-tapping implant of at least one of the above claims wherein said minor radius (94) tapers further than said major radius (92).

5. The self-tapping implant of at least one of the above claims
wherein each of said plurality or recesses (22, 24, 26, 28) extends in a direction parallel to a longitudinal axis of said body.

6. The self-tapping implant of at least one of the above claims wherein each of said recesses (22, 24, 26, 28) extends through one end of the implant.

7. The self-tapping implant of at least one of the above claims wherein said recesses (22, 24, 26, 28) are spaced slightly from the apical end of the implant.

8. The self-tapping implant of at least one of the above claims wherein said recesses (22, 24, 26, 28) are spaced symmetrically around the longitudinal axis of the implant.

9. The self-tapping implant of at least one of the above claims
wherein the recess wall that forms each cutting edge (32, 34, 36, 38) extends inwardly from the cutting edge (32, 34, 36, 38) at an acute angle "α" relative to the outer surface of the implant contiguous to the cutting edge (32, 34, 36, 38).

10. The self-tapping implant of at least one of the above claims wherein the recess wall that forms each cutting edge (32, 34, 36, 38) extends longitudinally through the thread at an acute angle "β" relative to the spiral path of the thread.

11. The self-tapping implant of at least one of the above claims wherein the radius of curvature of each of said modified thread segments is smaller than the radius of curvature of the wall of said preformed hole (19) in the bone.

12. The self-tapping implant of at least one of the above claims which is made of titanium.

13. The self-tapping implant of at least one of the above claims wherein said pitch radii diminish immediately behind said cutting edges (32, 34, 36, 38).

14. The self-tapping implant of at least one of the above claims wherein the diminishing pitch radius is produced by a reduction in only the minor diameter (94).

## Patentansprüche

1. Selbstschneidendes Zahnimplantat, das umfasst:
einen im Allgemeinen zylindrischen Körper (12) mit einer mit Gewinde versehenen Außenfläche zum Befestigen des Implantat an den Wänden eines vorgeformten Lochs (19) in einem Knochen, wobei der Körper (12) eine Vielzahl von Längsvertiefungen (22, 24, 26, 28) aufweist, die in der mit Gewinde versehenen Fläche an einem Ende desselben ausgebildet sind und in Längsrichtung über eine Vielzahl von Gängen des Gewindes verlaufen, um eine selbstschneidende Schneidkante (32, 34, 36, 38) an jeder Unterbrechung des Gewindes durch eine der Aussparungen (22, 24, 26, 28) zu bilden, und wobei sich jedes modifizierte Gewindesegment zwischen einem Paar benachbarter Aussparungen (22, 24, 26, 28) erstreckt, **dadurch gekennzeichnet, dass** der Teilkreishalbmesser zwischen dem vorderen und dem hinteren Ende des modifizierten Gewindesegments abnimmt, wobei der Teilkreishalbmesser als ein Abstand zwischen der Längsachse des Implantats und der Linie definiert ist, auf der die Gewindebreite jedes Gangs dem Zwischenraum zwischen benachbarten Gängen gleich ist, und zwar so, dass der kleine Radius (94) des modifizierten Gewindesegments von dem vorderen Ende zu dem hinteren Ende des modifizierten Gewindesegments abnimmt.

2. Selbstschneidendes Implantat nach Anspruch 1, wobei sich die mit Gewinde versehene Fläche des Körpers (12) in der Längsrichtung entlang wenigstens eines Abschnitts der Aussparungen (22, 24, 26, 28) so verjüngt, dass aufeinander folgende Schneidkanten (32, 34, 36, 38) an dem Gewinde in dem sich verjüngenden Bereich sich zunehmend ändernde Radien aufweisen.

3. Selbstschneidendes Implantat nach Anspruch 1 oder 2, wobei sowohl die kleinen als auch die großen Radien (94; 92) der modifizierten Gewindesegmente zwischen den Aussparungen (22, 24, 26, 28) der Verjüngung in Längsrichtung folgen.

4. Selbstschneidendes Implantat nach wenigstens einem der oben stehenden Ansprüche, wobei sich der kleine Radius (94) weiter verjüngt als der große Radius (92).

5. Selbstschneidendes Implantat nach wenigstens einem der oben stehenden Ansprüche, wobei jede der Vielzahl von Aussparungen (22, 24, 26, 28) in einer Richtung parallel zu einer Längsachse des Körpers verläuft.

6. Selbstschneidendes Implantat nach wenigstens einem der oben stehenden Ansprüche, wobei jede der Aussparungen (22, 24, 26, 28) durch ein Ende des Implantats hindurch verläuft.

7. Selbstschneidendes Implantat nach wenigstens einem der oben stehenden Ansprüche, wobei die Aussparungen (22, 24, 26, 28) geringfügig von dem Spitzenende des Implantats beabstandet sind.

8. Selbstschneidendes Implantat nach wenigstens einem der oben stehenden Ansprüche, wobei die Aussparungen (22, 24, 26, 28) symmetrisch um die Längsachse des Implantats herum beabstandet sind.

9. Selbstschneidendes Implantat nach wenigstens einem der oben stehenden Ansprüche, wobei die Vertiefungswand, die jede Schneidkante (32, 34, 36, 38) bildet, sich von der Schneidkante (32, 34, 36, 38) in einem spitzen Winkel "α" relativ zu der Außenfläche des Implantats zu der Schneidkante (32, 34, 36, 38) benachbart nach innen erstreckt.

10. Selbstschneidendes Implantat nach wenigstens einem der oben stehenden Ansprüche, wobei die Aussparungswand, die jede Schneidkante (32, 34, 36, 38) bildet, in einem spitzen Winkel "β" relativ zu dem Spiralweg des Gewindes in Längsrichtung durch das Gewinde verläuft.

11. Selbstschneidendes Implantat nach wenigstens einem der oben stehenden Ansprüche, wobei der Krümmungsradius jedes der modifizierten Gewindesegmente kleiner ist als der Krümmungsradius der Wand des vorgeformten Lochs (19) in dem Knochen.

12. Selbstschneidendes Implantat nach wenigstens einem der oben stehenden Ansprüche, das aus Titan besteht.

13. Selbstschneidendes Implantat nach wenigstens einem der oben stehenden Ansprüche, wobei sich die Teilkreishalbmesser unmittelbar hinter den Schneidkanten (32, 34, 36, 38) verringern.

14. Selbstschneidendes Implantat nach wenigstens einem der oben stehenden Ansprüche, wobei der sich verringernde Teilkreishalbmesser lediglich durch eine Verringerung des kleinen Durchmessers (94) erzeugt wird.

## Revendications

1. Implant dentaire autotaraudeur comprenant
un corps globalement cylindrique (12) présentant une surface extérieure filetée pour fixer l'implant aux parois d'un trou préformé (19) dans un os, ledit corps (12) comportant une pluralité d'évidements longitudinaux (22, 24, 26, 28) formés dans ladite surface filetée au niveau d'une extrémité de celle-ci et s'étendant longitudinalement à travers une pluralité de tours du filetage pour former un bord coupant autotaraudeur (32, 34, 36, 38) au niveau de chaque interruption du filetage par un desdits évidements (22, 24, 26, 28), et chaque segment de filetage modifié s'étendant entre une paire d'évidements adjacents (22, 24, 26, 28) **caractérisé en ce que** le rayon de pas entre les extrémités d'attaque et de fuite du segment de filetage modifié est décroissant, le rayon de pas étant défini comme une distance entre l'axe longitudinal de l'implant et la ligne sur laquelle la largeur du filetage de chaque tour est égale à l'espace entre les tours adjacents, et de sorte que le rayon mineur (94) du segment de filetage modifié soit décroissant de l'extrémité d'attaque vers l'extrémité de fuite dudit segment de filetage modifié.

2. Implant autotaraudeur selon la revendication 1, dans lequel la surface filetée dudit corps (12) se resserre dans la direction longitudinale le long d'au moins une partie desdits évidements (22, 24, 26, 28) de sorte que des bords coupants successifs (32, 34, 36, 38) le long du filetage dans la région resserrée aient des rayons changeant progressivement.

3. Implant autotaraudeur selon la revendication 1 ou 2, dans lequel les deux rayons mineur et majeur (94 ; 92) des segments de filetage modifiés entre lesdits évidements (22, 24, 26, 28) suivent ledit resserrement longitudinal.

4. Implant autotaraudeur selon au moins une des revendications ci-dessus, dans lequel ledit rayon mineur (94) se resserre davantage que ledit rayon majeur (92).

5. Implant autotaraudeur selon au moins une des revendications ci-dessus, dans lequel chaque évidement de ladite pluralité d'évidements (22, 24, 26, 28) s'étend dans une direction parallèle à un axe longitudinal dudit corps.

6. Implant autotaraudeur selon au moins une des revendications ci-dessus, dans lequel chacun desdits évidements (22, 24, 26, 28) s'étend à travers une extrémité de l'implant.

7. Implant autotaraudeur selon au moins une des revendications ci-dessus, dans lequel lesdits évidements (22, 24, 26, 28) sont espacés légèrement de l'extrémité apicale de l'implant.

8. Implant autotaraudeur selon au moins une des revendications ci-dessus, dans lequel lesdits évidements (22, 24, 26, 28) sont espacés symétriquement autour de l'axe longitudinal de l'implant.

9. Implant autotaraudeur selon au moins une des revendications ci-dessus, dans lequel la paroi d'évidement qui forme chaque bord coupant (32, 34, 36, 38) s'étend vers l'intérieur depuis le bord coupant (32, 34, 36, 38) selon un angle aigu « α » par rapport à la surface extérieure de l'implant contiguë au bord coupant (32, 34, 36, 38).

10. Implant autotaraudeur selon au moins une des revendications ci-dessus, dans lequel la paroi d'évidement qui forme chaque bord coupant (32, 34, 36, 38) s'étend longitudinalement à travers le filetage selon un angle aigu « β » par rapport au chemin en spirale du filetage.

11. Implant autotaraudeur selon au moins une des revendications ci-dessus, dans lequel le rayon de courbure de chacun desdits segments de filetage modifiés est inférieur au rayon de courbure de la paroi dudit trou préformé (19) dans l'os.

12. Implant autotaraudeur selon au moins une des revendications ci-dessus, qui est composé de titane.

13. Implant autotaraudeur selon au moins une des revendications ci-dessus, dans lequel lesdits rayons de pas décroissent immédiatement derrière lesdits bords coupants (32, 34, 36, 38).

14. Implant autotaraudeur selon au moins une des revendications ci-dessus, dans lequel le rayon de pas décroissant est produit par une réduction d'uniquement le diamètre mineur (94).
